# EUROPÄISCHE PATENTANMELDUNG

(11) **EP 0 896 288 A2**
(43) Veröffentlichungstag der Anmeldung: **10.02.1999**
(21) Anmeldenummer: 98113751.6
(22) Anmeldetag: 23.07.1998
(51) Int. Cl.: G06K 1/12

(54) **Kennzeichnung von industriellen Erzeugnissen oder Einzelteilen davon**

(30) Priorität: 05.08.1997 DE 19733786
(71) Anmelder: DAIMLER-BENZ AKTIENGESELLSCHAFT, 70546 Stuttgart (DE)
(72) Erfinder: Robitschko, Peter, 71069 Sindelfingen (DE); Kollbach, Dietbert, 73733 Esslingen (DE); Dilt, Bernhardt, 71067 Sindelfingen (DE)

(57) **Zusammenfassung**

Kennzeichnung von industriellen Erzeugnissen oder Einzelteilen davon, wobei eine Anzahl von Schweißpunkten als Träger einer kennzeichnenden Information, insbesondere einer codierten Information, dient.

## Beschreibung

Die vorliegende Erfindung betrifft eine Kennzeichnung von industriellen Erzeugnissen oder Einzelteilen davon, wie dies in der industriellen Praxis teilweise üblich ist.

Es ist üblich, beispielsweise Kraftfahrzeuge während der Fertigung zur Individualisierung oder zur Erschwerung von Diebstahl beispielsweise mit einer Prüfnummer zu versehen. Derartige Prüfnummern sind beispielsweise auf Plaketten aufgebracht, die bis zur Verschrottung des Kraftfahrzeuges ständig und dauerhaft am Kraftfahrzeug befestigt sind. Eine derartige Plakette kann mit visuell lesbaren alphanumerischen Zeichen, oder auch mit maschinenlesbaren, beispielsweise in binär codierter Form vorliegenden Zeichen ausgebildet sein. Eine derartige Plakette ist beispielsweise in der DE-AS 26 16 436 beschrieben. Nachteilig bei derartigen Plaketten ist jedoch, daß im Falle ihrer Entfernung ein Fahrzeug oft nicht mehr in einfacher Weise individuell erkannt werden kann.

Aus der DE-PS 37 28 622 ist eine Kennzeichnung von industriellen Erzeugnissen durch Einbrennen von alphanumerischen Zeichen und/oder Firmenzeichen in der Werkstückoberfläche mittels eines energiereichen Strahles, insbesondere eines Laserstrahles bekannt. Hierbei können prinzipiell an beliebigen Stellen des industriellen Erzeugnisses, beispielsweise eines Kraftfahrzeuges, individualisierende Informationen angebracht werden. Eine derartige Kennzeichnung wird jedoch als teuer und aufwendig angesehen, da beispielsweise spezielle Laser zur Verfügung gestellt werden müssen.

Aufgabe der Erfindung ist daher die Schaffung einer preiswerten und unaufwendig durchzuführenden Kennzeichnung von industriellen Erzeugnissen oder Einzelteilen davon.

Diese Aufgabe wird erfindungsgemäß durch eine Kennzeichnung mit den Merkmalen des Patentanspruches 1 gelöst.

Die erfindungsgemäße Kennzeichnung kann in einfacher Weise, ohne zusätzliche Kosten mittels beliebiger am industriellen Erzeugnis vorgesehener Schweißpunkte verwirklicht werden. Da hierbei ohnehin vorgesehene Schweißpunkte verwendet werden, entstehen keine zusätzlichen Kosten. Ferner kann die Kennzeichnung im wesentlichen in der gleichen Zeit durchgeführt werden, welche für das Schweißen an sich benötigt wird.

Vorteilhafte Ausgestaltungen der Erfindung sind Gegenstand der Unteransprüche.

Zweckmäßigerweise dienen die Schweißpunkte wenigstens einer Schweißpunktreihe zur Verbindung von Teilen der industriellen Erzeugnisse als Träger der kennzeichnenden Information. Es ist hierdurch möglich, beispielsweise in beliebigen Schweißpunktreihen einer Fahrzeugkarosserie die gewünschten Kennzeichnungen vorzunehmen. Hierbei entsteht gegenüber herkömmlichen Schweißarbeiten kein Mehraufwand.

Besonders bevorzugt ist, daß die Schweißpunkte einer Schweißpunktreihe durch relative Positionierung bezüglich ihrer jeweiligen Sollposition die kennzeichnende Information, insbesondere in binär codierter Form, tragen. Hierbei kann beispielsweise jeder Schweißpunkt einer Reihe bei der Rohbaufertigung der Karosse bewußt um ein bestimmtes Maß gegenüber einer Sollage in Längsrichtung bzw. Richtung der Schweißpunktreihe versetzt geschweißt werden, so daß je nach Richtung des Versatzes jedem Schweißpunkt ein binärer Wert 0 oder 1 zugeordnet werden kann. Es ist beispielsweise ebenfalls möglich, die Sollage einem binären Wert 0 oder 1 zuzuordnen, und eine versetzte Lage dem entsprechend anderen binären Wert. Auf diese Weise läßt sich einer längeren, unter Umständen mehrteiligen Schweißpunktreihe eine binär codierte Information zuordnen, die zur Identifizierung des Fahrzeuges verwendet werden kann. Diese Primärinformation kann durch eine weitere Verschlüsselung, die beispielsweise nur dem Hersteller bekannt ist, für den Dieb unkenntlich oder unverständlich gemacht werden. Die Verschlüsselung kann bedarfsweise geändert werden.

Besonders bevorzugt ist, daß die kennzeichnende Information visuell und/oder mittels eines Codierschlüssels lesbar ist. Hierdurch ist gewährleistet, daß sowohl eine schnelle visuelle Überprüfung, als auch eine aufwendigere, jedoch mit größerer Sicherheit behaftete maschinelle Prüfung der Echtheit eines industriellen Erzeugnisses durchführbar ist.

Nach einer zweckmäßigen Ausgestaltung enthält die kennzeichnende Information eine Produktionsnummer und/oder eine Herstellungsortinformation und/oder eine Prüfziffer. Es ist beispielsweise möglich, derartige Informationen verschachtelt in einer Schweißpunktreihe vorzusehen, so daß eine korrekte Extraktion der jeweiligen Daten nur mit einem entsprechenden Codierschlüssel möglich ist.

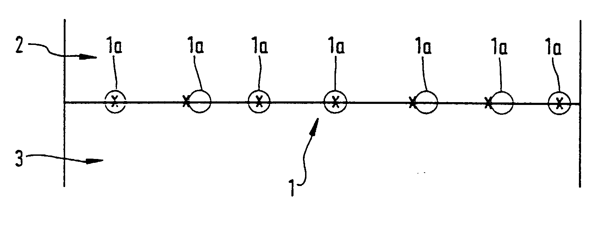

Eine bevorzugte Ausführungsform der Erfindung wird nun anhand der beigefügten Zeichnung im einzelnen erläutert. In dieser zeigt
die einzige Figur schematisch eine bevorzugte Ausführungsform einer erfindungsgemäßen Kennzeichnung.

Die Figur zeigt schematisch eine Schweißpunkte 1a aufweisende Schweißpunktreihe 1 zur Verbindung zweier Karosserieteile 2, 3. Hierbei sind die jeweiligen Schweißpunkte 1a durch Kreise dargestellt. Sollpositionen dieser Schweißpunkte 1a sind durch Kreuze markiert. Man erkennt, daß die Schweißpunkte teilweise mit den Sollpositionen übereinstimmen, und teilweise nicht. Im dargestellten Ausführungsbeispiel sind (von links nach rechts gesehen) der zweite, fünfte und sechste Schweißpunkt 1a bezüglich ihrer Sollposition nach rechts versetzt. Gemäß dem dargestellten Ausführungsbeispiel wird nun jedem Schweißpunkt 1a, dessen Position mit seiner Sollposition übereinstimmt, ein binärer Wert 0 zugeordnet. Jedem von der Sollposition versetzten Schweißpunkt 1a wird ein binärer Wert 1 zugeordnet. Die dargestellte Schweißpunktreihe enthält somit die binär codierte Information bzw. den Binärwert 0100110. Ein derartiger Binärwert kann eine unmittelbar zuordenbare, oder auch eine codierte Information darstellen.

Derartige, Kennzeichnungen darstellende codierte Schweißpunktreihen können in beliebiger Weise bei Schweißpunktreihen zu verbindender Karosserieteile vorgesehen sein. Es sollte hierbei darauf geachtet werden, daß die als Informationsträger bestimmten Schweißpunktreihen so ausgewählt werden, daß diese Schweißpunkte auch bei tiefgreifenden Umbau-, Veränderungs- oder Reparaturmaßnahmen unverändert in ihrem Rohzustand erhalten bleiben können. Ein nachträgliches, zusätzliches Anbringen von Schweißpunkten darf nicht möglich sein, oder muß jedenfalls eindeutig erkennbar sein.

Das Maß der Versetzung der jeweiligen Schweißpunkte bezüglich ihrer Sollposition kann je nach Anforderungen an die konkrete Schweißnaht mehr oder weniger variiert werden. Üblicherweise sind jedoch Abweichungen bzw. Versetzungen von ± 2 mm gegenüber der Sollposition in einfacher Weise sowohl visuell als auch maschinell lesbar.

## Patentansprüche

1. Kennzeichnung von industriellen Erzeugnissen oder Einzelteilen davon,
**dadurch gekennzeichnet,**
daß eine Anzahl von Schweißpunkten (1a) als Träger einer kennzeichnenden Information, insbesondere einer codierten Information, dient.

2. Kennzeichnung nach Anspruch 1, dadurch gekennzeichnet, daß die Schweißpunkte (1a) wenigstens einer Schweißpunktreihe (1) zur Verbindung von Teilen (2, 3) der industriellen Erzeugnisse als Träger der kennzeichnenden Information dienen.

3. Kennzeichnung nach Anspruch 2, dadurch gekennzeichnet, daß die Schweißpunkte (1a) einer Schweißpunktreihe (1) durch relative Positionierung bezüglich ihrer jeweiligen Sollpositionen die kennzeichnende Information, insbesondere in binär codierter Form, tragen.

4. Kennzeichnung nach einem der vorstehenden Ansprüche, dadurch gekennzeichnet, daß die kennzeichnende Information visuell und/oder maschinell, insbesondere mittels eines Codierschlüssels, lesbar ist.

5. Kennzeichnung nach einem der vorstehenden Ansprüche, dadurch gekennzeichnet, daß die kennzeichnende Information eine Produktionsnummer und/oder Herstellungsortinformation und/oder eine Prüfziffer enthält.
